# EUROPEAN PATENT APPLICATION

(11) **EP 1 158 287 A2**
(43) Date of publication of application: **28.11.2001**
(21) Application number: 01830318.0
(22) Date of filing: 17.05.2001
(51) Int. Cl.: G01M 13/02

(54) **Device for sensing wear of a transmission belt or chain, particularly for a transmission driving the camshaft of an internal combustion engine**

(30) Priority: 25.05.2000 IT TO000477
(71) Applicant: A.E. Assemblaggi Elettromeccanici di Bonardo Valter e Boido Giudo Snc, 10044 Pianezza (Torino) (IT)
(72) Inventor: Gallo, Mario, 10135 Torino (IT)
(74) Representative: Notaro, Giancarlo

(57) **Abstract**

A wear sensing device for transmission belts or chains, comprising a tensioning device (8) including a movable tensioning element (10) carried on a fixed support (12) and elastically pressing against a portion of the belt or chain (2 and 20). The position of the tensioning element (10) is detected by a position sensor (14), preferable of the induction type, the purpose of which is to promptly signal when wear on the belt or chain (2 and 20) exceeds a predetermined threshold.

## Description

The present invention refers to the field of belt and chain driven transmission, and those used to drive the valve-timing shaft of an internal combustion engine in particular.

Various types of sensor devices have already been proposed for preventing a belt or chain of the above type from breaking on an internal combustion engine when it is running (refer to DE-A-3 534 462 and DE-A-3 334 612 for example). Such devices however are relatively complicated and expensive and, in certain cases, require the use of a particular type of belt.

The Japanese patent application JP09256865 illustrates a wear sensor device associated with a tension roller and a timing belt that also requires the use of a toothed belt with metallic elements sunken into the teeth of the belt to work in conjunction with a magnetic sensor.

The object of this invention is that of realizing a device that is capable of resolving the above-mentioned problem with relatively simple and inexpensive means.

To achieve this objective, the object of the invention is a wear sensor device for transmission belts or chains, particularly those used to drive the valve-timing shaft of an internal combustion engine, characterized by the fact that it comprises:
a tensioning device, including a fixed support and a movable tensioning element, carried by the fixed support, that elastically presses against the portion of the belt or chain.
a position sensor for the tensioning element, capable of emitting an electrical signal indicating its position, and
an electronic data processing device for processing the signals emitted by the sensor device and generating an alarm signal when the movements of the tensioning element indicate that wear on the belt or chain exceeds a predetermined threshold.

In the preferred embodiment, the said sensor is an induction-based sensor, comprised of a movable magnetic core with a tensioning element and a fixed winding surrounding the magnetic core, the ends of which are connected to the said electronic data processing device.

In a variant, the tensioning element is associated with a hydraulic thrust cylinder and the sensor is capable of detecting the pressure in the active chamber of the hydraulic cylinder.

Due to the above-indicated characteristics, the device in accordance with this invention is capable of promptly signalling excessive belt or chain wear via relatively simple, low-cost means and, above all, without requiring the adoption of a particular type of belt or chain.

Additional characteristics and advantages will become evident from the description that follows, with reference to the attached drawings, which are supplied purely as a non limitative example, where:
- figure 1 is a schematic view of an internal combustion engine with a transmission belt that also drives the engine's valve-timing shaft,
- figure 2 is a schematic view of the first embodiment of a device in accordance with the invention and applicable to an engine of the type illustrated in figure 1,
- figure 3 illustrates a variant of figure 2, and
- figure 4 and 5 illustrate two further variants.

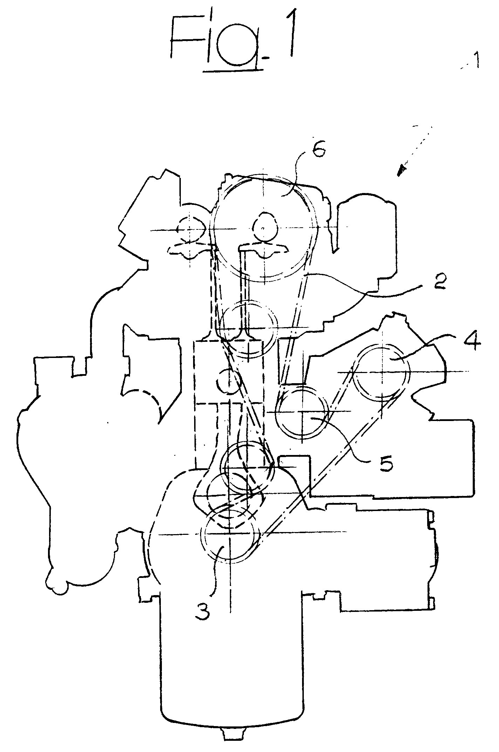

In figure 1, reference number 1 indicates the internal combustion engine as a whole, including a closed-loop toothed belt 2 for driving a series of pulleys 4, 5 and 6 that respectively drive the fuel pump, cooling water pump and the timing shaft that controls the engine valves, from a toothed pulley 3 mounted on the engine shaft.

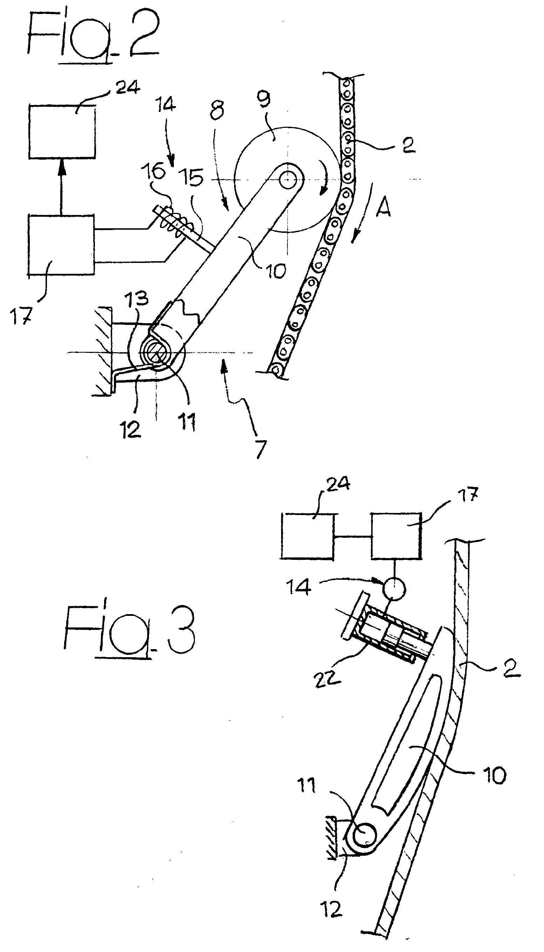

In order to avoid the belt 2 unexpectedly breaking whilst the internal combustion engine is running, a sensor device 7 in accordance with this invention is associated with any section of the belt 2. A first embodiment of the sensor 7 is illustrated in figure 2.

In outline, the device 7 is composed of a tensioning device 8 including a tensioning roller 9 that elastically presses against a portion of the external surface of the belt 2, which moves in the direction indicated by arrow A. The roller 9, which turns in the direction of the arrow shown in figure 2 due to its contact with the moving belt, is carried on a lever 10 that is mounted on a fixed support 12 in a way that it can oscillate around an axis 11 and is subjected to the action of a spring 13 that tends to keep the tensioning roller 9 against the belt 2, as already indicated. An induction-type sensor device 14 is associated with the lever 10 for determining the position of the lever 10.

In the preferred form of embodiment illustrated in figure 2, the sensor 14 is of the induction type, with a magnetic core 15 that moves with the lever 10 and is surrounded by a winding 16, the ends of which are connected to the electronic data processing device 17.

As the relative position of the magnetic core 15 changes with respect to the winding 16, so does the signal emitted by the sensor device 14, which is then processed by the electronic data processing device 17.

Preferable, this processing incorporates a filter to separate the useful component of the signal from the noise component that is always generated due to movement of the belt. The said filter can be realized in any known manner. For example, it could be consist of a signal preamplifier followed by a passive filter and, optionally, a threshold comparator. Alternatively, it could consist of an active filter incorporating a signal preamplifier and/or threshold comparator. In yet another variant, the filter could be a digital one. In addition, where a sensor employing current output is realized, a current/transconductance preamplifier could be used in alternative to the preamplifier or voltage comparator. The electronic data processing device 17 can be part of the vehicle's on-board electronic control unit or exist as a separate, ad hoc designed control unit. The system always includes a filter of the above type or an analogue/digital converter with a subsequent microprocessor controlled digital filter for converting the sensor's voltage or current signal into digital signals with fixed amplitude transposed into the time and/or frequency dominions (changes in duration and/or period). In these complex systems, a microphone combined with an electromagnetic sensor could also be used to acquire both signals related to anomalous stretching due to wear, and the consequent acoustic signals. Signals from the sensor, or two sensors as in the case just mentioned above, can be processed using one or more of the previously described systems and possibly using identification algorithms.

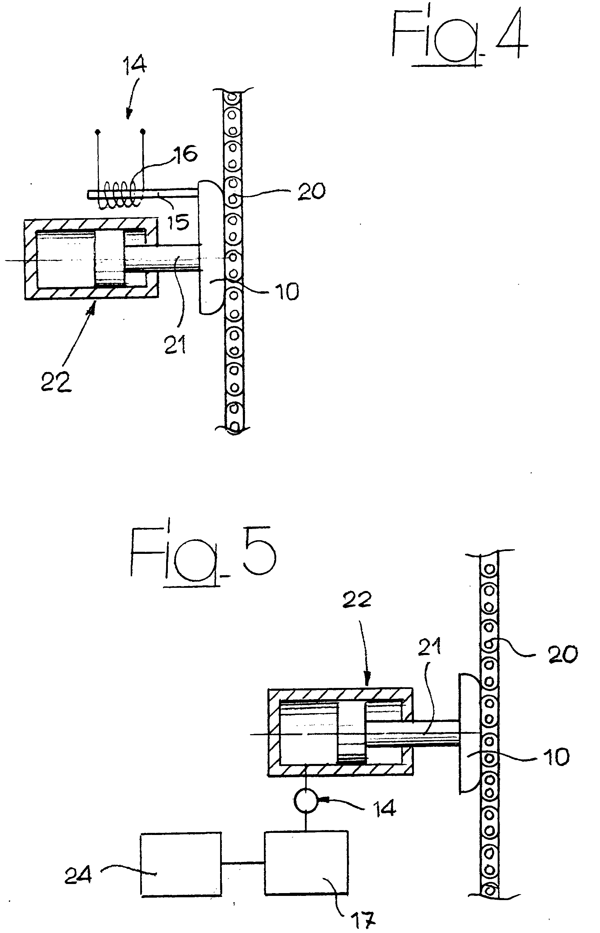

For example, it is possible to arrange for the acquisition and saving of signals in normal running conditions for the belt or chain for a digital comparison that produces an alarm output when the variations exceed a certain predetermined threshold, or when the signals become similar to pre-recorded anomalous signals. It is also possible to make provisions for saving signal information over time in a log and thus forecast the future wear trend of a belt or chain mounted in substitution. Figure 3 illustrates a variant that only differs from figure 2 in that the tensioning roller 9 is replaced by a slide shoe 10 mounted on the fixed support 12 so that it can oscillate around an axis 11 and subject, at one end, to the thrust exerted by a cylinder 15, incorporating a simple helical spring for example, or consisting of a hydraulic cylinder, as will be better described in the following. Figures 4 and 5 refer to the case where the tensioning element is also formed by a slide shoe 10, in this case elastically pressed against a section of a timing chain 20. Figure 4 indicates an induction-type sensor 14. Instead, in the case of figures 3 and 5, the slide shoe 10 is associated with the rod 21 of a hydraulic thrust cylinder 22. In this case the sensor device consists of a pressure sensor 14 suitable for detecting the pressure in the active chamber of the cylinder 22 and emitting an output signal that is sent to the electronic data processing device 17. As in the case of figure 2, the electronic data processing device 17 is capable of activating an alarm device 24, consisting of an luminous indicator and/or acoustic signal for example, to warn that the maximum permitted level of wear has been exceeded, beyond which substitution of the belt or chain is highly advisable.

In cases where a pressure sensor is employed, its use also allows pressure trends to be kept under control for the purposes of obtaining diagnostic information with respect to parameters for normal engine running. Thus, for example, it is possible to establish a normal running condition in which the detected internal pressure oscillates within predetermined amplitude and frequency band around an average external pressure value or some other predetermined value that correlates to the external pressure with certainty, and an anomalous running condition (whether due to excess wear or malfunction of one or more parts of the engine) where the detected pressure oscillates around an external pressure value or around a predetermined reference value with an amplitude and/or frequency outside of the predetermine band.

Naturally, the principle of the invention being understood, the constructional details and forms of embodiment could be extensively changed with respect to that described and illustrated by way of example, without leaving the scope of this invention.

## Claims

1. A wear sensing device for transmission belts or chains, particularly those used to drive the valve-timing shaft of an internal combustion engine, **characterized in that** it includes:
a tensioning device (8), including a fixed support (12) and a movable tensioning element (10), carried by the fixed support (12), that elastically presses against a portion of the belt or chain (2 and 20),
a position sensor (14) for the tensioning element (10), capable of emitting an electrical signal indicating its position, and
an electronic data processing device (17) for processing the signals emitted by the sensor device (14) and generating an alarm signal when the movements of the tensioning element indicate that the wear on the belt or chain exceeds a predetermined threshold.

2. A sensor device according to Claim 1, **characterized in that** the said sensor (14) is an induction-type position sensor, comprised of a movable magnetic core (15) with a tensioning element (10) and a fixed winding (16) surrounding the magnetic core (15), the ends of which are connected to the said electronic data processing device (17).

3. A sensor device according to Claim 2, **characterized in that** the said electronic data processing device (17) includes a filter for separating the useful component from the noise component of the signal emitted by the sensor (14).

4. A sensor device according to Claim 1, **characterized in that** the said tensioning element (8) is in the form of a lever (10), articulated on a fixed support (12) and pushed against the belt or chain (2 and 20) by elastic means (13).

5. A sensor device according to Claim 1, **characterized in that** the said tensioning element is a slide shoe (10), articulated or linearly movable, subjected to the action of a thrust cylinder.

6. A sensor device according to Claim 5, **characterized in that** the said thrust cylinder is a hydraulic cylinder.

7. A sensor device according to Claim 6, **characterized in that** the sensor (14) is capable of detecting the pressure in the internal chamber of the hydraulic cylinder (22).

8. An internal combustion engine, **characterized in that** it includes a device in accordance with one or more of the previous claims. The whole is substantially as described and illustrated, and for the specified purposes.
